# EUROPEAN PATENT SPECIFICATION

(11) **EP 3 265 650 B1**
(45) Date of publication and mention of the grant of the patent: **12.06.2019**
(21) Application number: 16709531.4
(22) Date of filing: 04.03.2016
(51) Int. Cl.: E21B 47/10

(54) **TRACER AND METHOD**
TRACER UND VERFAHREN
TRACEUR ET PROCÉDÉ

(30) Priority: 04.03.2015 GB 201503644
(43) Date of publication of application: 10.01.2018
(73) Proprietor: Johnson Matthey Public Limited Company, London EC4A 4AB (GB)
(72) Inventor: BRIERLEY, Aidan, Billingham, Cleveland TS23 4ED (GB); HUDSON, Paul Ronald, Billingham, Cleveland TS23 4EA (GB)
(74) Representative: Bown, Mark Richard
(86) International application number: PCT/GB2016/050578
(87) International publication number: WO 2016/139489

(56) References cited:
- US-A1- 2012 031 613
- US-A1- 2013 126 158
- US-A1- 2014 262 247

## Description

The present invention concerns the deployment of tracers within a subterranean well or reservoir for tracing fluid flows.

It is well known to place tracers in a well in order to detect flow of fluid from a part of the well where a tracer has been placed. Radioactive tracers have been widely used for many years in well-monitoring applications. As an example, see US 5,077,471, in which radioactive tracers are injected into a perforated well-bore, sealed and then monitored for decay to indicate the fluid flow from the formation. US 4,755,469 describes the use of rare metal tracers for tracing oil and associated reservoir fluids by mixing an oil-dispersible rare metal salt with oil or an oillike composition, injecting the dissolved tracer composition into a subterranean reservoir and analysing oil fluids produced from a different part of the reservoir for the presence of the rare metal to determine whether the oil mixed with the tracer has been produced from the reservoir.

Hydraulic fracturing is common in the oil and gas exploration and production industry whereby a hydrocarbon-containing rock formation, or reservoir, is fractured in order to allow the hydrocarbon to flow out of the rock through the rock fractures. Many methods of fracturing a rock formation and maintaining a fracture open for the flow of hydrocarbon are known and practised in the industry. It is common to prop open a fracture by injecting proppant particles into the fracture so that flow of hydrocarbon from the fracture can be maintained. It is also known in the art to trace the flow of fluids from a reservoir, including fluids flowing after a fracturing operation, using tracers. For example, European Patent Number 1991759 describes a method of monitoring the flow of fluid within or from a reservoir comprising the steps of inserting a solid non-radioactive tracer into the reservoir by means of a perforation tool, thereafter collecting a sample of fluid within or flowing from the reservoir and analysing said sample to determine the amount of said tracer contained in the sample. From the presence or absence of tracer in the sample, its amount and other parameters such as timing of the sample collection etc., information about the fluid flow within the reservoir may be gathered. US 3,623,842 describes a method of determining fluid saturations in reservoirs by injecting at least two tracers having different partition coefficients between fluid phases (e.g. oil and water) into the formation and monitoring the appearance of the two tracers in the produced fluids.

US2013/126158 describes methods for controlled release of tracers using composite particles formed for example by compression in a mold. US2012/031613 describes methods and compositions for determining fracture geometry in subterranean formations using tracers carried on single particles or agglomerates of particles.

It is an object of the invention to provide a method of placing a tracer compound within a well penetrating a subterranean reservoir which provides advantages over prior art methods.

According to the invention there is provided a method of making a tracer material, a tracer material obtained by the method, and a method of tracing a flow of fluid from a hydrocarbon reservoir in accordance with the claims appended hereto.

The tracer material comprises a plurality of separate agglomerates, each agglomerate comprising a cluster of particles, wherein the particles carry a tracer composition at least partially overlain by a retaining material and wherein the cluster of particles is bound together by a binding material so as to form the agglomerate. Preferably the binding material is the retaining material. Preferably the particles have an outer surface on which the tracer composition is at least partially located and on which the retaining material at least partially overlies the composition. Preferably the particles are porous particles having at least some pores in which the tracer composition is at least partially located and in which the retaining material at least partially overlies the tracer composition.

A method, according to the invention, of tracing a flow of fluid from a hydrocarbon reservoir comprises the steps of placing within a well penetrating said reservoir a tracer material according to the invention, containing a tracer composition comprising one or more tracers, thereafter collecting a sample of fluids flowing from the well and analysing said sample to determine the presence or absence of said tracer. The method can optionally further comprise determining the concentration of one or more tracers in fluids flowing from the well. A method of tracing a flow of fluid from a hydrocarbon reservoir can comprise taking a plurality of samples of fluids flowing from the well over a period of time, analysing the samples and determining the concentrations of one or more tracers in the reservoir fluids over time. The fluid which is to be traced may be a hydrocarbon fluid, i.e. an oil or gas or alternatively an aqueous fluid such as produced water. The tracer composition may contain one or more tracers for tracing hydrocarbon flow and one or more different tracers for tracing water flows. In some embodiments it may be that the tracer material includes a plurality of each of two or more different types of agglomerate, each type of agglomerate comprising a different tracer composition. For example, a first type of agglomerate may comprise a first tracer composition comprising one or more tracers for tracing hydrocarbon flow and a second type of agglomerate may comprise a second tracer composition comprising one or more tracers for tracing water flows. In some embodiments it may be that the agglomerates comprise two or more tracer compositions. For example, each agglomerate may comprise a first tracer composition comprising one or more tracers for tracing hydrocarbon flow and a second tracer composition comprising one or more tracers for tracing water flows. In some embodiments it may be that the tracer material consists of a single type of agglomerate. The agglomerate may comprise a tracer composition comprising one or more tracers for tracing hydrocarbon flow, it may comprise a tracer composition comprising one or more tracers for tracing water flows, it may comprise a tracer composition comprising one or more tracers for tracing hydrocarbon flow and one or more different tracers for tracing water flows.

A method, according to the invention, of making a tracer material comprises the steps of providing a plurality of particles, applying a tracer composition to the particles, contacting the particles with a liquid precursor to a retaining material, granulating the contacted particles to form a plurality of agglomerates and treating the agglomerates to form a retaining material from the liquid precursor. In some embodiments, the method may comprise the step of removing a solvent from the particles after applying the tracer composition to the particles.

In some embodiments the method may comprise providing a plurality of particles, applying a tracer composition to the particles, contacting the particles with a liquid precursor to a retaining material, optionally treating the particles to form a retaining material from the liquid precursor, contacting the particles with a second liquid precursor to a binding material, granulating the contacted particles to form a plurality of agglomerates and treating the agglomerates to form a binding material from the second liquid precursor and, optionally a retaining material from the liquid precursor. The binding material may be the same as the retaining material, in which case the second liquid precursor may be the same as the liquid precursor.

In some embodiments the method may comprise providing a plurality of particles, applying a tracer composition to the particles, contacting the particles with a liquid precursor to a retaining material, optionally treating the particles to form a retaining material from the liquid precursor, optionally contacting the particles with a second liquid precursor to a binding material, granulating the contacted particles to form a plurality of agglomerates and treating the agglomerates to form either a binding material from the second liquid precursor or a retaining material from the liquid precursor, or both.

The retaining material may be a solid. The retaining material may be a glass. The retaining material may be a highly viscous liquid, for example a liquid having a viscosity of greater than 10⁴ Pa.s. The binding material, if present, may be a solid. The binding material, if present, may be a glass. The binding material, if present, may be a highly viscous liquid, for example a liquid having a viscosity of greater than 10⁴ Pa.s. Crush strength may be an important parameter for tracer materials inserted into a hydraulic fracture well along with proppant. The provision of a binding material, or of a retaining material that also acts to bind the cluster of particles together to form the agglomerates may advantageously provide an agglomerate with a satisfactory crush strength. The agglomerates may be formed by wet granulation. During the granulation the particles form into clusters of particles held together by the liquid precursors. Subsequent treatment forms the retaining or binding material from the liquid precursor resulting in agglomerates with satisfactory crush strength. Wet granulation may be particularly preferable in that it may permit a large quantity of tracer material to be made in an efficient way and with good roundness and sphericity. Preferably the agglomerates are unmoulded agglomerates in that they are formed without the use of a mould and without any compressive moulding. Preferably the agglomerates are uncompacted agglomerates in that no compaction step is carried out during production of the agglomerates. That may advantageously produce a tracer material having improved tracer elution properties.

The method may comprise the step of providing the plurality of particles by grinding a particulate material. Preferably the applying of the tracer composition to the particles comprises applying a tracer composition to the particles in the form of a liquid or a solution, which may be aqueous or non-aqueous, and optionally removing a solvent from the particles.

The particles are preferably porous particles and the applying of the tracer composition to the particles preferably comprises impregnating the porous particles with the tracer composition. The method may comprise the step of providing the plurality of particles by grinding a porous particulate material.

The treating of the agglomerates may comprise waiting a pre-determined amount of time, applying heat, applying a reactant, applying UV light or other treatments.

Preferably the agglomerates have a sphericity of 0.5 or greater. Preferably the agglomerates have a roundness of 0.5 or greater. More preferably the agglomerates have a sphericity of 0.6 or greater. More preferably the agglomerates have a roundness of 0.6 or greater. The sphericity and roundness may be measured in accordance with BS EN ISO 13503-2:2006+A1:2009. The tracer material will typically be mixed, for example dry mixed, with proppant material in preparation for being introduced into the well with the proppant material. The tracer material may be introduced into the well at the same time as the proppant to allow mixing during injection. The agglomerates may mix more easily than tracer particles formed of a non-agglomerated particulate material due to the improved shape characteristics of the agglomerates. It may be that the agglomerates have a size of between 0.425 and 3 mm, preferably between 0.425 and 1.18 mm. Preferably the agglomerates have a size of between 8 and 140 mesh (that is, between 105 µm and 2.38 mm), preferably between 16 and 30 mesh (that is, between 595 µm and 1.19 mm), and more preferably between 20 and 40 mesh (that is, between 420 µm and 841 µm). In some embodiments the agglomerates may have a size of between 30 and 50 mesh (that is, between 297 µm and 595 µm), between 40 and 70 mesh (that is, between 210 µm and 420 µm) or between 70 and 140 mesh (that is, between 105 µm and 210 µm). In that way the agglomerates may match the size of typical proppant materials.

The particles may comprise an organic material such as fibers, ground almond shells, ground walnut shells, ground coconut shells, coffee grinds, plant seeds or plant pips, but is preferably an inorganic material, especially an inorganic oxide material or other ceramic material. The material may be ground into a powder. That is the particles may be powder particles. Suitable materials include silica, alumina, including hydrated and partially hydrated forms of alumina, aluminosilicates, porous glasses, calcium carbonate, clays such as sepiolite, kaolins, bentonite, attapulgite, and halloysite, diatomaceous earth, activated carbon, porous glasses, zeolites, moler earth, fullers earth. The materials may be calcined. The particles preferably have a porosity of at least 5 vol %, more preferably at least 10 vol %, yet more preferably at least 20 vol %, still more preferably at least 30 vol %, even more preferably at least 40 vol % and most preferably at least 50 vol %.

The particles may have a size of not greater than 500 µm, and preferably not greater than 250 µm. In some embodiments the particles may have a size not greater than 200 µm or not greater than 100 µm. The particles may have a size of not less than 10 µm and more preferably not less than 50 µm. In some embodiments, each agglomerate may comprise a cluster of four or more, preferably 10 or more, more preferably 50 or more particles. In some embodiments each agglomerate may comprise a cluster of not more than 1000, or not more than 100 particles.

The tracer composition comprises a tracer. Preferably the tracer composition is selected to comprise at least one tracer which is not naturally found in the fluid, the flow of which is to be traced. The tracer composition may include the tracer or the tracer composition may itself be the tracer. Suitable hydrocarbon-soluble tracers are known to the skilled person. The tracer is preferably a liquid or solid at room temperature. More than one tracer may be incorporated into the agglomerates, either by incorporating more than one tracer into a tracer composition, or by incorporating more than one tracer composition into the agglomerate, or both. More than one tracer may be incorporated into the tracer material, either by incorporating more than one tracer into the agglomerates, or by incorporating different agglomerates comprising different tracers into the tracer material, or both. The tracer may comprise a dye which can be detected by visual means or by a spectroscopic method. The dye may be coloured or not coloured to the eye. Fluorescent compounds, detectable by fluorescence spectroscopy, are well-known for use as tracers and may be suitable for this application. Chemical tracer compounds may be used as tracers. Such compounds may be detected by liquid or gas chromatography coupled to mass spectroscopy, electron capture detectors or other methods of detection. Atomic absorption spectroscopy or other methods may be used. The tracer composition is preferably a solid or liquid which is soluble in or miscible with a hydrocarbon fluid, especially a naturally-occurring oil or gas or soluble in or miscible with an aqueous liquid. The tracer composition is preferably soluble in or miscible with produced fluids in the form of naturally-occurring oil, gas or produced water found in subterranean reservoirs. The selection of suitable tracers is known in the art and the skilled person is capable of selecting one or more appropriate tracers.

Suitable tracers include, but are not limited to classes of materials such as dyes, fluorescent materials, emissive materials, aromatic compounds (preferably halogenated aromatic compounds), cyclic compounds (preferably cycloalkanes, especially halogenated cycloalkanes) and aliphatic compounds (preferably halogenated aliphatic compounds). Each of these compounds having suitable functional groups, or derivatives of such functional groups, including but not limited to: alkyl, alkenyl, alkynyl, nitro, aldehyde, haloformyl, carbonate ester, amine, hydroxyl, phenyl, benzyl, carboxylate, sulfonate, carbonyl, acetal, halogen, partially or completely halogenated hydrocarbon chains or cycles, carboxyl, ester, methoxy, ethoxy, hydroperoxy, peroxy, ether, sulfo, borono, borate, boronate, orthoester, carboxamide, amide, nitrile, isonitrile, thiol, sulphide, or sulfonyl, or any combination of those groups. Suitable tracers include but are not limited to 4-bromodiphenyl ether, 4-bromobenzophenone, heptadecafluoro-1-decane, 1,5-diaminoanthraquinone, (1-bromoethyl)benzene, 2-bromoethylethylether, 5-chloro-3-phenyl-2,1-benzisoxazole, 2,4'-dichloroacetophenone, and 1-chloroanthraquinone.

More than one tracer may be contained within the same tracer material. Different combinations of tracers may be used in different tracer materials to identify different flows. Tracer materials containing different tracers or different combinations of tracers may be placed in different locations, e.g. at different parts of a well, so that passing fluid contacting each tracer material at its respective location may be identified. Groups of tracer materials can be associated with each other where there is one tracer per particle with different particles each having a different tracer being mixed together in specific ratios. Groups of tracer materials also can be associated with each other where there is one tracer per particle with different particles each having a different tracer being mixed together in specific ratios where there can be more than one particle having the same tracer.

The retaining material retards the rate of discharge of the tracer from the tracer material compared with the rate of discharge from a similar tracer material in the absence of the retaining material. Preferably the retaining material acts both to overlie the tracer composition, for example the tracer composition impregnated in pores of the particles, thus retarding the rate of release of the tracer, and also acts as a binder to hold the cluster of particles together as an agglomerate. That is, the binding material is the retaining material. In other words, no separate binding material is present and the retaining material at least partially overlies the tracer composition and binds together the cluster of particles so as to form the agglomerate. The presence of the retaining material as a binder may further assist in retarding the rate of discharge. Using the same material advantageously permits the material to be applied in a single step to serve both purposes, with the presence of the retaining material as a binder providing simultaneous advantages in terms of improved shape characteristics and improved release rates of the agglomerated powder particles.

The retaining material may comprise a polymeric material or a waxy organic material. Suitable polymers include polyurethanes, epoxy resins, polyesters, acrylics, polyvinyl acetate, polyvinyl alcohol, formaldehyde-based resins and cellulose compounds such as methylcellulose. Similar materials may be used as the binding material in embodiments where a separate binding material is used.

When different tracer materials are used in a well, they may be designed to release tracers at different rates by appropriate selection of the retaining material as well as the amount of the retaining material and how it is applied to the particles. The release rates of the tracers can depend upon the solubility of the tracer or the tracer composition in water and/or production fluid. One of ordinary skill in the art would be able to evaluate various retaining materials and select the appropriate retaining material and the amount of retaining material to use, as well as the best method of applying the retaining material to the particles by testing various materials under conditions appropriate to the environment in which they will be used. Tracer can be released at selective different rates into a well by altering the quantity of retaining material to restrict the amount of fluid which encounters tracer or tracer composition or the rate at which the fluid encounters the tracer or tracer composition or by choosing a tracer or tracer composition with a higher or lower solubility in the fluids produced by the well, thereby retarding or speeding the dissolution of the tracer or tracer composition into the flowing ambient fluid.

In this way fluid contacting the tracer materials may be detected at different stages in the production history of the well. The tracers in each tracer material may be the same or different. Different tracer materials containing different tracers may be made readily identifiable by colouring the tracer materials or applying other visible indicators.

The tracer material comprises particles, at least one tracer composition and at least one retaining material. The tracer material preferably comprises from 5 - 90 wt%, more preferably from 5 - 30% wt %, of retaining material. The tracer material preferably comprises from 1 - 90 wt%, more preferably from 3 - 15 wt%, even more preferably from 5 - 10 wt% of the tracer composition. The tracer material can comprise these materials in any weight combination within these ranges.

A particularly preferable tracer material comprises 25-35 wt% retaining material and 5-10 wt% tracer composition.

The tracer material may be made by first contacting the particles with the tracer composition such that the tracer composition is at least partially taken up by the particles. Preferably the particles are porous particles and the tracer composition is at least partially absorbed into the pore structure of the porous particles. When one or more of the tracers of the tracer composition are solid at room temperature, they may be applied in the form of liquids at a temperature above their melting point or in the form of a solution or dispersion in a solvent or dispersant. The solvent or dispersant may comprise another tracer or may be a non-tracer liquid. The solvent or dispersant may be removed from the particles by drying following application of the tracer composition or alternatively may remain within or on the particles. When the tracer material contains more than one tracer composition, each may be contacted with the particles in a separate step but more preferably they are contacted together as a mixture. The contacting may be carried out by mixing the solid particles with the tracer composition in the form of a liquid. Alternatively the tracer composition may be applied by spraying or other suitable method that delivers at least some of the tracer composition to the particles, for example into pores in porous particles. If the tracer composition contains a solvent, it may be removed by evaporation following application.

The liquid precursor to the retaining material is applied to the tracer-carrying particles in a form in which the liquid precursor is at least partially taken up by the particles. Preferably the particles are porous particles and the liquid precursor at least partially penetrates at least some of the pores of the particles. Preferably the liquid precursor is applied to the particles in the form of a hardenable liquid or a solution. The hardenable liquid may harden thermally. Methods of applying the retaining material to the tracer-carrying particles include (a) solidification of melted retaining material by decreasing the temperature, (b) by a chemical reaction which causes bonds to form which alter the physical state of the material from liquid to solid by increasing the melting point of the material - that is, polymerisation, or (c) by the removal of some constituent of the material (for example, solvent) which causes a reaction of the parts or the mixture which remain which causes bonds to form which alter the physical state of the material from liquid to solid by increasing the melting point of the material. When the retaining material is a curable polymer, such as a polyurethane, an epoxy resin or another thermosetting polymer, it is applied to the powder as a liquid precursor incorporating the monomer or cross-linkable polymers and the agglomerates are then cured in the presence of a cure catalyst and/or a cross-linking agent. When the liquid precursor is curable by heat or light the material is cured in a step involving the application of heat or light to the agglomerates. When the retaining material is a thermoplastic polymer or wax it may be applied in the form of a molten material and then cooled to form a solid. The retaining material may also be applied to the particles as a solution which is then dried by evaporation of the solvent. Thus the liquid precursor to the retaining material may be the retaining material in a liquid form, for example molten or dissolved in solution, or it may be a liquid including compounds which react or bind to form the retaining material.

The method of application of the liquid precursor is selected according to the requirements of the materials used. Application methods which can be used to treat the particles with the liquid precursor include the use of a fluidised bed, tumbling or stirring the particles with liquid.

The binding material may be similar to the retaining material and may be applied in similar ways.

The tracer material may be used as, or with, proppant particles, whereby they are added to a fracturing fluid treatment and forced into fractures created in a rock formation. The tracer material may remain in the fracture and may release the tracer from the material when the material is in contact with a flow of hydrocarbon fluid. Preferably the tracer material is used with other proppant particles so that only a proportion of the material forced into a fracture is tracer material. The tracer material of the invention may be especially advantageous for such applications because of the improved sphericity and roundness of the agglomerates. The proportion of tracer material to (non-tracer-containing-) proppant can depend upon a number of factors, such as the sensitivity of the analytic method used to detect the tracer, the production rate of the well, which effects the dilution of the tracer in the produced fluid, and the length of time that a detectable release of tracer into the production fluid is desired. One of skill in the art would be able to determine the proportion of tracer material to proppant based on these factors. The tracer material is preferably free-flowing in that it can be poured from a container and does not significantly aggregate.

The tracer material may alternatively be placed at locations within a well associated with the completion apparatus, e.g. filters, well liners etc. For such applications, the tracer material may be placed in a container which is suitably perforated in order to allow the well fluids access to the material whilst retaining the material within the container. As an alternative embodiment the tracer material may be formed, for example moulded, into an agglomerated object. That is, an agglomerated object may be formed by agglomerating the agglomerates of the tracer material. In particular, the material may be formed into one or more shaped agglomerated objects which can be placed within a well. Such shaped agglomerated objects may, for example, take the form of strips or mats which are formed by moulding the agglomerates of the tracer material into the required shape with a binder to bind the agglomerates of the tracer material to each other. The binder may be of the same composition as the retaining material. The agglomerates of the tracer material are placed in a mould before the binder is solidified. Alternatively the binder may be of a different composition from the retaining material. In such a case the binder may, if required, be selected to be broken down on contact with the well fluids if it is required to release the tracer material from the agglomerated article when the article has been placed in the well. It may be particularly advantageous to use a retaining material that will not break down, or breaks down only slowly, for example over the course of years or longer and a binder that breaks down rapidly, for example over the course of at most years, months, or weeks. For example 90% or more, preferably 95% or more and more preferably 99% or more of the retaining material may remain after 1 year or more, preferably 2 years or more and more preferably 3 years or more in the well and 20% or less, preferably 10% or less and more preferably 5% or less of the binder may remain after 1 year, 1 month, or 1 week. In some embodiments, the retaining material may break down at a rate that is 25% or less, preferably 10% or less, more preferably 1% or less and yet more preferably 0.1% or less of the rate at which the binder breaks down. In that way an object may be provided that is inserted as an object but that then breaks down to release tracer material comprising agglomerates comprising clusters of particles.

The tracer material described above, when used in oil wells, can provide detectable levels, that is levels above 10ppb, preferably above 100ppb and more preferably above 1ppm, of one or more tracers in production fluids for periods of at least 3 months, at least 6 months, at least 9 months, at least 12 months, at least 15 months, at least 18 months, at least 21 months or at least 24 months.

An advantage of providing a tracer material comprising a plurality of separate agglomerates is that the process of forming the agglomerates, for example by wet granulation, permits the incorporation of other components into the tracer material to vary the properties of the tracer material or to provide additional functionality. For example, in some embodiments, the particles from which the agglomerate is formed may comprise a mixture of different particle types. In that way, the cluster of particles may comprise a mixture of particles. For example, the mixture of particles may comprise a first particle type having a relatively high crush strength (compared to the other particles types in the agglomerate) and a second particle type having a relatively low density (compared to the other particle types in the agglomerate). In that way a tracer material may be provided that has a relatively high crush strength to weight ratio (compared to tracer materials having a single particle type). In some embodiments, the agglomerates may comprise one or more additional compositions. The additional composition may be a tracer composition but is preferably a non-tracer composition. For example, the additional composition may be a strengthening material, or a well treatment agent such as a viscosity modifier, density modifier, flow modifier, gelling modifier, lubricant, foaming modifier, scale inhibitor, disinfectant, anti-freeze or corrosion inhibitor. Examples of such well treatment agents include guar gum, acids including acetic acid, citric acid and phosphoric acid, sodium chloride, sodium carbonate, potassium carbonate, borate salts, glutaraldehyde, glycerol, isopropanol, ethylene glycol, lactose and polyacrylamide. Other well treatment agents will be known to the skilled person. The one or more additional composition may be applied with the tracer composition or in a separate application step. For example the additional composition may be mixed with the particles prior to applying the tracer composition. In some embodiments the additional composition may be applied to the particles before the application of the tracer composition. In some embodiments the additional composition may be applied to the particles after the application of the tracer composition. The composition may be at least partially overlain by the retaining material. In some embodiments the additional composition may be applied with the liquid precursor so that the composition is mixed with the retaining material.

A broad aspect of the invention provides the provision of a material for injection into an underground formation, the material comprising a plurality of separate agglomerates, each agglomerate comprising a cluster of particles bound together by a binding material so as to form the agglomerate. The material is preferably a proppant material. The injection is preferably injection with a proppant material. The underground formation is preferably a hydrocarbon well and is more preferably a hydrocarbon well undergoing hydraulic fracturing. The particles may comprise a mixture of particles. The agglomerate may comprise one or more compositions selected from the group comprising tracers, viscosity modifiers, density modifiers, flow modifiers, gelling modifiers, lubricants, foaming modifiers, scale inhibitors, disinfectants, anti-freezes or corrosion inhibitors. The compositions may be carried by at least some of the particles. The compositions may be comprised in at least some of the particles. At least some of the particles may be particles of the compositions, for example particles of tracer.

It will be appreciated that features described in relation to one aspect of the invention may be equally applicable to other aspects of the invention. For example, features described in relation to a tracer material of the invention may be equally applicable to a method of the invention and *vice versa*. It will also be appreciated that optional features may not apply, and may be excluded from, certain aspects of the invention.

### Description of the Drawings

The invention will be further described by way of example only with reference to the following figures, of which:

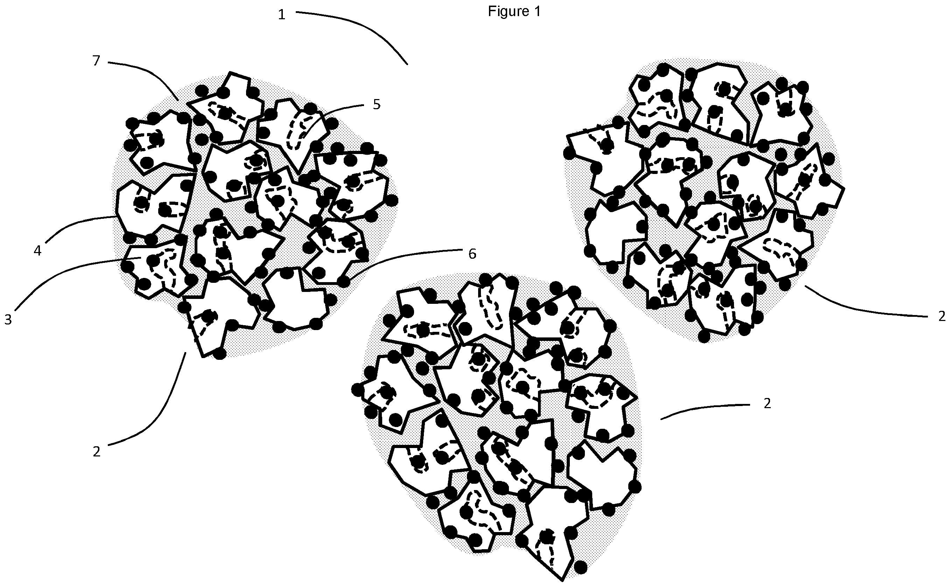

Figures 1 is a schematic of a tracer material embodying the present invention.

### Detailed Description

In figure 1 a tracer material 1 is formed from a plurality of agglomerates 2. Each agglomerate 2 is formed from a cluster of particles 3, which carry on their surface 4 and in their pores 5 a tracer composition 6. The tracer composition 6 is at least partially overlain by a retaining material 7. The retaining material 7 also binds the cluster of particles 3 together to form the agglomerate 2.

### Examples

The invention will be further described in the following examples.

### Example 1

A 50 litre Lodige™ dryer equipped with rotating ploughs and a steam-heated jacket was charged with 15.65kg of XR99™ calcined moler earth adsorbent particles (available from Lubetech). To this vessel was added (whilst agitating) 12.5kg of 20% acetone solution of a halogenated aromatic compound (tracer) over a period of several hours. The agitation was continued and heating was applied until all acetone was removed via a reflux apparatus attached to the top of the Lodige vessel body. Several aliquots of a mixture of a commercial bisphenol-A-(epichlorhydrin) epoxy resin, its recommended hardener, and a solvent (acetone) were added to the vessel whilst stirring and heating were continued. The aliquot quantities are given below.

| Aliquot | Epoxy resin (kg) | Hardener (kg) | Acetone (kg) |
|---|---|---|---|
| 1 | 0.575 | 0.115 | 0.25 |
| 2 | 0.576 | 0.115 | 0.192 |
| 3 | 0.576 | 0.115 | 0.145 |
| 4 | 0.578 | 0.115 | 0.147 |
| 5 | 0.577 | 0.115 | 0.148 |
| 6 | 0.577 | 0.118 | 0.140 |
| 7 | 1.440 | 0.292 | 0.349 |
| 8 | 1.440 | 0.288 | 0.358 |

Addition of all above aliquots was carried out at 10 minutes intervals via a peristaltic pump. The vessel heating and agitation were then continued for several hours, whilst the acetone was removed. Following this, agglomeration of the powder had occurred to create agglomerates which ranged in size from <420 µm to 20 mm, with the bulk of the material falling between 0.425 and 3 mm.

Mass recovered from the vessel was 23.1kg, 94.8% of the amount added. Lost mass is attributed to material not being released from the vessel walls during discharge.

Of the 23.1kg which was discharged, 45% (10.4kg) was between 0.425 and 1.18mm in size.

## Claims

1. A method of making a tracer material (1) comprising the steps of: providing a plurality of particles (3); applying a tracer composition (6) to the particles (3); contacting the particles with a liquid precursor to a retaining material; granulating the contacted particles (3) to form a plurality of agglomerates (2); and treating the agglomerates to form a retaining material (7) from the liquid precursor.

2. A method according claim 1, wherein the retaining material (7) is a solid, glass or highly viscous material.

3. A method according to claim 1 or claim 2, wherein the method comprises the step of removing a solvent from the particles (3) after applying the tracer composition (6) to the particles.

4. A method according to any one of claims 1 to 3, wherein the plurality of particles are provided by grinding a particulate material.

5. A method according to any one of the preceding claims, wherein the applying of the tracer composition (6) to the particles (3) comprises applying a tracer composition to the particles in the form of a liquid or a solution.

6. A method according to any one of the preceding claims, wherein the particles are porous particles and the applying of the tracer composition to the particles comprises impregnating the porous particles with the tracer composition.

7. A method according to any one of the preceding claims, wherein the method comprises applying one or more additional compositions selected from the group comprising strengthening materials, viscosity modifiers, density modifiers, flow modifiers, gelling modifiers, lubricants, foaming modifiers, scale inhibitors, disinfectants, anti-freezes or corrosion inhibitors.

8. A tracer material obtained by the method of any one of claims 1 to 7, the tracer material comprising a plurality of separate agglomerates (2), each agglomerate comprising a cluster of particles (3), wherein the particles carry a tracer composition (6) at least partially overlain by a retaining material (7) and wherein the cluster of particles is bound together by a binding material so as to form the agglomerate (2).

9. A tracer material according to claim 8 wherein the particles (3) have an outer surface (4) on which the tracer composition (6) is at least partially located and on which the retaining material (7) at least partially overlies the composition.

10. A tracer material according to claim 8 or claim 9 wherein the particles (3) are porous particles having at least some pores (5) in which the tracer composition (6) is at least partially located and in which the retaining material (7) at least partially overlies the tracer composition.

11. A tracer material according to any one of claims 8 to 10 wherein the binding material is the retaining material.

12. A tracer material according to any one of claims 8 to 11 wherein the tracer material (1) includes a plurality of each of two or more different types of agglomerate (2), each type of agglomerate comprising a different tracer composition.

13. A tracer material according to claim 12 wherein a first type of agglomerate comprises a first tracer composition comprising one or more tracers for tracing hydrocarbon flow and a second type of agglomerate comprises a second tracer composition comprising one or more tracers for tracing water flows.

14. A tracer material according to any one of claims 8 to 11 wherein each agglomerate (2) comprises a first tracer composition comprising one or more tracers for tracing hydrocarbon flow and a second tracer composition comprising one or more tracers for tracing water flows.

15. A method of tracing a flow of fluid from a hydrocarbon reservoir comprising the steps of placing within a well penetrating said reservoir a tracer material according to any one of claims 8 to 14, thereafter collecting a sample of fluids flowing from the well and analysing said sample to determine the presence or absence of said tracer composition and optionally determining the concentration of one or more tracers in fluids flowing from the well.

## Patentansprüche

1. Verfahren zur Herstellung eines Indikator-Materials (1), umfassend die Schritte: Bereitstellen einer Vielzahl von Teilchen (3); Aufbringen einer Indikator-Zusammensetzung (6) auf die Teilchen (3); Inkontaktbringen der Teilchen mit einem flüssigen Vorläufer an einem Rückhaltematerial; Granulieren der kontaktierten Teilchen (3) zum Bilden einer Vielzahl von Agglomeraten (2); und Behandeln der Agglomerate zum Bilden eines Rückhaltematerials (7) aus dem flüssigen Vorläufer.

2. Verfahren nach Anspruch 1, wobei das Rückhaltematerial (7) ein festes, glasartiges oder hochviskoses Material ist.

3. Verfahren nach Anspruch 1 oder Anspruch 2, wobei das Verfahren den Schritt des Entfernens eines Lösungsmittels von den Teilchen (3) nach dem Aufbringen der Indikator-Zusammensetzung (6) auf die Teilchen umfasst.

4. Verfahren nach einem der Ansprüche 1 bis 3, wobei die Vielzahl der Teilchen durch Mahlen eines teilchenförmigen Materials bereitgestellt wird.

5. Verfahren nach einem der vorhergehenden Ansprüche, wobei das Aufbringen der Indikator-Zusammensetzung (6) auf die Teilchen (3) das Aufbringen einer Indikator-Zusammensetzung auf die Teilchen in Form einer Flüssigkeit oder einer Lösung umfasst.

6. Verfahren nach einem der vorhergehenden Ansprüche, wobei die Teilchen poröse Teilchen sind und das Aufbringen der Indikator-Zusammensetzung auf die Teilchen das Imprägnieren der porösen Teilchen mit der Indikator-Zusammensetzung umfasst.

7. Verfahren nach einem der vorhergehenden Ansprüche, wobei das Verfahren das Aufbringen einer oder mehrerer zusätzlicher Zusammensetzungen umfasst, die aus der Gruppe ausgewählt werden, die Verstärkungsmaterialien, Viskositätsmodifikatoren, Dichtemodifikatoren, Strömungsmodifikatoren, Geliermodifikatoren, Schmiermittel, Schaummodifikatoren, Kesselsteininhibitoren, Desinfektionsmittel, Frostschutzmittel oder Korrosionsinhibitoren umfasst.

8. Indikator-Material, das durch das Verfahren nach einem der Ansprüche 1 bis 7 erhalten wird, wobei das Indikator-Material eine Vielzahl von separaten Agglomeraten (2) umfasst, wobei jedes Agglomerat eine Anhäufung von Teilchen (3) umfasst, wobei die Teilchen eine Indikator-Zusammensetzung (6) tragen, die zumindest teilweise durch ein Rückhaltematerial (7) überlappt ist, und wobei die Anhäufung von Teilchen durch ein Bindematerial miteinander verbunden ist, um das Agglomerat (2) zu bilden.

9. Indikator-Material nach Anspruch 8, wobei die Teilchen (3) eine Außenfläche (4) aufweisen, auf der die Indikator-Zusammensetzung (6) zumindest teilweise angeordnet ist und auf der das Rückhaltematerial (7) zumindest teilweise über der Zusammensetzung liegt.

10. Indikator-Material nach Anspruch 8 oder Anspruch 9, wobei die Teilchen (3) poröse Teilchen mit mindestens einigen Poren (5) sind, in denen die Indikator-Zusammensetzung (6) zumindest teilweise angeordnet ist und in denen das Rückhaltematerial (7) zumindest teilweise über der Indikator-Zusammensetzung liegt.

11. Indikator-Material nach einem der Ansprüche 8 bis 10, wobei das Bindematerial das Rückhaltematerial ist.

12. Indikator-Material nach einem der Ansprüche 8 bis 11, wobei das Indikator-Material (1) eine Vielzahl von jeweils zwei oder mehr verschiedener Arten von Agglomerat (2) beinhaltet, wobei jede Art von Agglomerat eine andere Indikator-Zusammensetzung umfasst.

13. Indikator-Material nach Anspruch 12, wobei eine erste Art von Agglomerat eine erste Indikator-Zusammensetzung umfasst, die ein oder mehrere Indikator-Stoffe zum Verfolgen eines Kohlenwasserstoffstroms umfasst, und eine zweite Art von Agglomerat mit einer zweiten Indikator-Zusammensetzung umfasst, die ein oder mehrere Indikator-Stoffe zum Verfolgen von Wasserströmen umfasst.

14. Indikator-Material nach einem der Ansprüche 8 bis 11, wobei jedes Agglomerat (2) eine erste Indikator-Zusammensetzung umfasst, die einen oder mehrere Indikator-Stoffe zum Verfolgen eines Kohlenwasserstoffstroms umfasst, und eine zweite Indikator-Zusammensetzung, die einen oder mehrere Indikator-Stoffe zum Verfolgen von Wasserströmen umfasst.

15. Verfahren zum Verfolgen eines Fluidstroms aus einer Kohlenwasserstoff-Lagerstätte, umfassend die Schritte des Einbringens eines Indikator-Materials nach einem der Ansprüche 8 bis 14 in ein durch diese Lagerstätte verlaufendes Bohrloch, des anschließenden Sammelns einer Probe von Fluiden, die aus dem Bohrloch strömen, und des Analysierens der Probe, um das Vorhandensein oder Fehlen der Indikator-Zusammensetzung zu bestimmen, und des wahlweisen Bestimmens der Konzentration eines oder mehrerer Indikator-Stoffe in den Fluiden, die aus dem Bohrloch strömen.

## Revendications

1. Procédé de fabrication d'un matériau de traceur (1) comprenant les étapes de : fourniture d'une pluralité de particules (3) ; application d'une composition de traceur (6) sur les particules (3) ; mise en contact des particules avec un précurseur liquide d'un matériau de retenue ; granulation des particules (3) mises en contact pour former une pluralité d'agglomérats (2) ; et traitement des agglomérats pour former un matériau de retenue (7) à partir du précurseur liquide.

2. Procédé selon la revendication 1, dans lequel le matériau de retenue (7) est un matériau solide, vitreux ou hautement visqueux.

3. Procédé selon la revendication 1 ou la revendication 2, le procédé comprenant l'étape de séparation d'un solvant d'avec les particules (3) après l'application de la composition de traceur (6) sur les particules.

4. Procédé selon l'une quelconque des revendications 1 à 3, dans lequel la pluralité de particules sont fournies en broyant un matériau particulaire.

5. Procédé selon l'une quelconque des revendications précédentes, dans lequel l'application de la composition de traceur (6) sur les particules (3) comprend d'appliquer une composition de traceur sur les particules sous la forme d'un liquide ou d'une solution.

6. Procédé selon l'une quelconque des revendications précédentes, dans lequel les particules sont des particules poreuses et l'application de la composition de traceur sur les particules comprend d'imprégner les particules poreuses de la composition de traceur.

7. Procédé selon l'une quelconque des revendications précédentes, le procédé comprenant d'appliquer une ou plusieurs compositions supplémentaires choisies dans le groupe comprenant les matériaux de renforcement, les modificateurs de viscosité, les modificateurs de densité, les modificateurs d'écoulement, les modificateurs de gélification, les lubrifiants, les modificateurs de moussage, les inhibiteurs de tartre, les désinfectants, les antigels ou les inhibiteurs de corrosion.

8. Matériau de traceur obtenu par le procédé de l'une quelconque des revendications 1 à 7, le matériau de traceur comprenant une pluralité d'agglomérats (2) séparés, chaque agglomérat comprenant un groupe de particules (3), les particules portant une composition de traceur (6) recouverte au moins partiellement par un matériau de retenue (7) et le groupe de particules étant lié ensemble par un matériau liant de façon à former l'agglomérat (2).

9. Matériau de traceur selon la revendication 8, dans lequel les particules (3) ont une surface externe (4) sur laquelle la composition de traceur (6) se trouve au moins partiellement et sur laquelle le matériau de retenue (7) recouvre la composition au moins partiellement.

10. Matériau de traceur selon la revendication 8 ou la revendication 9, dans lequel les particules (3) sont des particules poreuses comportant au moins certains pores (5) dans lesquels la composition de traceur (6) se trouve au moins partiellement et dans lesquels le matériau de retenue (7) recouvre la composition de traceur au moins partiellement.

11. Matériau de traceur selon l'une quelconque des revendications 8 à 10, dans lequel le matériau liant est le matériau de retenue.

12. Matériau de traceur selon l'une quelconque des revendications 8 à 11, le matériau de traceur (1) comprenant une pluralité de chacun de deux types d'agglomérats (2) différents ou plus, chaque type d'agglomérat comprenant une composition de traceur différente.

13. Matériau de traceur selon la revendication 12, dans lequel un premier type d'agglomérat comprend une première composition de traceur comprenant un ou plusieurs traceurs pour suivre le flux d'hydrocarbures et un second type d'agglomérat comprend une seconde composition de traceur comprenant un ou plusieurs traceurs pour suivre les flux d'eau.

14. Matériau de traceur selon l'une quelconque des revendications 8 à 11, dans lequel chaque agglomérat (2) comprend une première composition de traceur comprenant un ou plusieurs traceurs pour suivre le flux d'hydrocarbures et une seconde composition de traceur comprenant un ou plusieurs traceurs pour suivre les flux d'eau.

15. Procédé de traçage d'un flux de fluides provenant d'un réservoir d'hydrocarbures comprenant les étapes de placement à l'intérieur d'un puits pénétrant dans ledit réservoir d'un matériau de traceur selon l'une quelconque des revendications 8 à 14, puis la collecte d'un échantillon de fluides s'écoulant du puits et l'analyse dudit échantillon afin de déterminer la présence ou l'absence de ladite composition de traceur et éventuellement la détermination de la concentration d'un ou de plusieurs traceurs dans les fluides s'écoulant du puits.
